# DEMANDE DE BREVET EUROPEEN

(11) **EP 1 466 958 A2**
(43) Date de publication de la demande: **13.10.2004**
(21) Numéro de dépôt: 04290454.0
(22) Date de dépôt: 20.02.2004
(51) Int. Cl.: C10G 45/22, B01D 19/00

(54) **Procédé et installation de traitement d'hydrocarbures et de séparation des phases produites par ledit traitement**

(30) Priorité: 26.02.2003 US 373197
(71) Demandeur: Institut Français du Pétrole, 92852 Rueil-Malmaison Cedex (FR)
(72) Inventeur: Pinault, Mathieu, 69007 Lyon (FR); Hoffmann, Frédéric, 69110 Sainte Foy les Lyon (FR); Kressmann, Stéphane, 69360 Serezin du Rhone (FR); Porot, Pierre, 75010 Paris (FR); Duddy, John E., Bensalem, PA 19020 (US)

(57) **Abrégé**

Procédé pour le traitement d'hydrocarbures comprenant au moins deux enceintes de traitement et des moyens de séparation des fractions liquide et gazeuse contenues dans le mélange polyphasique produit dans la première enceinte de traitement, ledit mélange étant issu d'une zone de mise en contact (700) d'une charge liquide d'hydrocarbures, d'une charge gazeuse et de particules solides, ledit procédé comprenant une séparation des phases liquide et gazeuse localisée dans l'enceinte. Installation comprenant :
a) au moins une première enceinte comprenant des moyens internes à ladite enceinte de séparation des fractions gazeuse et liquide issues de ladite zone, b) des moyens de transfert de ladite fraction liquide vers une deuxième enceinte, c) une deuxième enceinte comprenant une deuxième zone de mise en contact et des moyens d'introduction, dans ladite zone, d'une charge gazeuse et d'une charge liquide comprenant au moins une partie de la fraction liquide issue de la première enceinte.

## Description

La présente invention concerne une installation et un procédé pour le traitement d'hydrocarbures comprenant au moins deux enceintes voire une succession d'enceintes disposées en série, au moins une réaction se produisant le plus souvent à l'intérieur desdites enceintes, mettant en jeu au moins une phase solide, au moins une phase liquide et au moins une phase gazeuse. L'invention trouve par exemple son application dans les domaines de la conversion et/ou du traitement des distillats ou des résidus issus de la distillation du pétrole, des charges liquides d'hydrocarbures issues de la liquéfaction du charbon, des pétroles bruts. Plus particulièrement, la présente installation et la présente méthode permettent la séparation d'un mélange comprenant une fraction gazeuse et une fraction liquide comprenant éventuellement des particules solides, ledit mélange étant issu d'une zone de mise en contact d'une charge liquide, d'une charge gazeuse et de particules solides. Bien que la présente installation et la présente méthode soient applicables à tout procédé nécessitant de mettre en contact une phase gazeuse et une phase liquide avec des particules solides, l'invention sera par la suite décrite, de manière non limitative, dans le cas particulier de l'hydroconversion d'une charge d'hydrocarbures dans un lit bouillonnant de particules solides catalytiques.

Le procédé en lit bouillonnant utilisé pour l'hydroconversion des fractions lourdes d'hydrocarbures ou d'une charge liquide hydrocarbonée issue d'un charbon consiste généralement à mettre en contact, le plus souvent en écoulement à co-courant ascendant, une charge hydrocarbonée en phase liquide et une phase gazeuse dans un réacteur contenant des particules solides comprenant un catalyseur d'hydroconversion. La zone réactionnelle comporte en général au moins un moyen de soutirage des particules solides situé à proximité du bas du réacteur et au moins un moyen d'appoint desdites particules contenant un catalyseur frais à proximité du sommet dudit réacteur. Ledit réacteur comporte en outre le plus souvent au moins un circuit permettant le recyclage de la phase liquide issue de la zone réactionnelle, situé à l'intérieur ou à l'extérieur dudit réacteur. Ledit recyclage est destiné, selon une technique connue de l'homme du métier, à maintenir un niveau d'expansion du lit suffisant pour assurer le bon fonctionnement de la zone réactionnelle en régime triphasique gaz/liquide/solide.
Selon un premier principe, tel que par exemple illustré par la demande de brevet EP 1,086,734, la séparation du mélange polyphasique issu du lit bouillonnant est effectuée à l'extérieur et en aval d'un réacteur unique.
Dans la demande de brevet EP 732,389 il est proposé d'utiliser selon un autre principe deux réacteurs en série en incluant un séparateur gaz-liquide externe entre lesdits deux réacteurs. Les produits gazeux et liquides issus du premier réacteur sont séparés dans ledit séparateur et une partie desdits produits liquides est recyclée vers ledit premier réacteur de façon à maintenir l'ébullition du catalyseur tandis que l'autre partie alimente le second réacteur.
Pour des raisons économiques, le séparateur placé après le réacteur est le plus souvent plus petit que le réacteur et le contrôle du niveau de liquide dans le séparateur externe est par conséquent très difficile dans ce type de procédé. De plus, le séparateur externe doit être à la même pression que le réacteur lui même, ce qui implique un coût de fabrication élevé dudit séparateur.

### Description détaillée de l'invention

Un objet de l'invention est d'abord une installation pour le traitement d'hydrocarbures comprenant au moins deux enceintes de traitement et des moyens de séparation des fractions liquide et gazeuse contenues dans le mélange polyphasique produit dans la première enceinte de traitement, dans une zone de mise en contact (700) d'une charge liquide d'hydrocarbures, d'une charge gazeuse et de particules solides, ladite installation comprend :
- une première enceinte (1) de traitement comprenant des moyens d'introduction (10) d'une charge d'hydrocarbures et des moyens d'introduction (20) d'une charge gazeuse dans ladite zone (700), des moyens internes à ladite enceinte de séparation (280, 310, 350) des fractions gazeuse et liquide issues de ladite zone (700), des moyens de collecte (210, 32) et des moyens d'évacuation (50) de ladite fraction liquide vers l'extérieur de ladite première enceinte (1), des moyens d'évacuation (70) de ladite fraction gazeuse vers l'extérieur de ladite première enceinte (1) et des moyens de contrôle (130) du niveau d'expansion de ladite fraction liquide dans ladite enceinte (1),
- des moyens de transfert (50) d'au moins une partie de ladite fraction liquide vers une deuxième enceinte réactionnelle (2),
- une deuxième enceinte (2) de traitement comprenant une deuxième zone de mise en contact (701), et des moyens d'introduction d'une charge gazeuse et des moyens d'introduction dans ladite deuxième zone (701) d'une charge liquide comprenant au moins une partie de la fraction liquide issue de la première enceinte (1) de traitement.

Ladite installation peut comprendre en outre des moyens de recycle dans la première enceinte d'une partie de ladite fraction liquide.

Dans un mode de réalisation possible de l'invention, la deuxième enceinte de traitement comprend en outre des moyens internes de séparation des fractions gazeuse et liquide issues de la deuxième zone de mise en contact, des moyens de collecte et des moyens d'évacuation de ladite fraction liquide à l'extérieur de ladite deuxième enceinte, des moyens d'évacuation de ladite fraction gazeuse à l'extérieur de ladite deuxième enceinte et des moyens de contrôle du niveau d'expansion de la fraction liquide dans ladite deuxième enceinte. Le dispositif pourra alors avantageusement comprendre en outre des moyens de recycle dans la deuxième enceinte d'une partie de ladite fraction liquide.

De manière avantageuse, l'installation décrite ci-dessus comprend en outre des moyens de contrôle des niveaux d'expansion des zones de mise en contact dans lesdites enceintes.

Les moyens d'introduction de la deuxième zone peuvent comprendre en outre des moyens d'appoint en charge liquide.

Ladite installation inclut en outre de manière préférée des moyens de contrôle du débit liquide transféré entre les deux enceintes. elle peut aussi inclure en outre des moyens de contrôle du débit gazeux issu desdites enceintes.

Selon un mode possible de réalisation de l'invention, au moins la première enceinte pourra par exemple comprendre :
- un équipement de recycle muni d'au moins un passage pour le mélange comprenant les fractions gazeuse et la phase liquide issues de la zone de mise en contact,
- au moins un élément de séparation interne à ladite enceinte placé immédiatement après le ou lesdits passages et permettant une séparation dudit mélange en une fraction A contenant la majorité du liquide et une minorité de gaz et une fraction B essentiellement gazeuse contenant une minorité du liquide,
- une conduite, placée à proximité de la partie supérieure de ladite enceinte, permettant l'évacuation de la fraction B,
   une conduite d'évacuation prolongeant l'équipement de recycle et par laquelle s'écoule gravitairement et est évacuée la fraction A,
- des moyens de contrôle du niveau d'expansion de ladite phase liquide dans ladite enceinte, lesdits moyens étant configurés de façon à maintenir ledit niveau à une distance de l'orifice de sortie de la fraction B supérieure ou égale à 0,05 fois le diamètre interne de ladite enceinte.

L'invention concerne également un procédé de traitement étagé d'hydrocarbures comprenant une séparation des fractions liquide et gazeuse contenues dans le mélange polyphasique produit par chaque étage dudit traitement, ledit procédé comportant au moins les étapes suivantes :
a) on introduit une charge d'hydrocarbures et une charge gazeuse dans une première enceinte de traitement, et on met en contact ladite charge d'hydrocarbures et ladite charge gazeuse avec des particules solides,
b) on sépare à l'intérieur de ladite première enceinte réactionnelle les fractions liquide et gazeuse contenues dans le mélange polyphasique issu de l'étape a),
c) on récupère séparément la fraction gazeuse et la fraction liquide à l'extérieur de la première enceinte,
d) on introduit au moins une partie de la fraction liquide issue de la première enceinte dans la deuxième enceinte avec une charge gazeuse et on met en contact au sein de la deuxième enceinte ladite fraction liquide et ladite charge gazeuse avec des particules solides.
De manière avantageuse, le procédé comprend en outre les étapes suivantes :
e) on sépare à l'intérieur de ladite deuxième enceinte les fractions liquide et gazeuse contenues dans le mélange polyphasique issu de l'étape d),
f) on récupère la fraction gazeuse et la fraction liquide à l'extérieur de ladite deuxième enceinte.

Dans un mode de réalisation du procédé dans lequel on utilise n enceintes, n étant compris entre 2 et 10, au moins une partie de la fraction liquide issue d'une enceinte n-1 placée en amont étant introduite dans l'enceinte n placée en aval dans le sens de circulation des fluides.

Selon l'invention, lesdites particules solides en mouvement pourront être par exemple dispersées sous forme d'une suspension immergée dans une phase liquide dans une zone inférieure de l'enceinte, alors généralement appelée selon le terme anglo-saxon réacteur slurry. Selon un autre mode d'application préférée de la présente invention, lesdites particules solides en mouvement pourront être présentes au sein d'un lit bouillonnant. Des exemples de réacteurs fonctionnant selon les principes propres aux lits en suspension (slurry) et aux lits bouillonnants ainsi que leurs principales applications sont par exemple décrits dans « Chemical reactors, *P. Trambouze, H. Van Landeghem et J.P. Wauquier,* ed. Technip (1988) ». Selon l'invention, avantageusement, dans au moins la première enceinte réactionnelle (i.e. celle comportant la séparation interne) lesdits particules solides sont en lit bouillonnant ou en slurry. De préférence la deuxième (ou autres) enceinte opère également en lit bouillonnant ou slurry (respectivement).

Plus particulièrement mais non limitativement, la présente invention trouve son application dans la conversion d'une charge introduite dans ladite enceinte sous la forme liquide et contenant des hydrocarbures, ladite conversion s'effectuant par réaction avec une phase gazeuse, comprenant par exemple de l'hydrogène (hydroconversion) en présence d'une phase solide qui présente le plus souvent une activité catalytique (catalyseur).

Les charges que l'on peut traiter dans le cadre de la présente invention peuvent être des résidus atmosphériques ou des résidus sous vide de distillation directe, des résidus désasphaltés, des résidus issus de procédé de conversion tels que par exemple ceux provenant du coking, des charges liquides d'hydrocarbures issues de la liquéfaction du charbon, des pétroles bruts, d'une hydroconversion en lit fixe tels que ceux issus des procédés HYVAHL de traitement des lourds mis au point par la demanderesse ou des procédés d'hydrotraitement des lourds en lit bouillonnant tels que ceux issus des procédés H-OIL, ou encore des huiles désasphaltées au solvant par exemple au propane, au butane, ou au pentane, ou encore des asphaltes qui proviennent habituellement du désasphaltage de résidus sous vide de distillation directe ou de résidus sous vide des procédés H-OIL ou HYVAHL dilués par une fraction hydrocarbonée ou un mélange de fractions hydrocarbonées choisies dans le groupe formé par une huile de coupe légère (LCO selon les initiales de la dénomination anglo-saxonne de Light Cycle Oil), une huile de coupe lourde (HCO selon les initiales de la dénomination anglo-saxonne de Heavy Cycle Oil), une huile décantée (DO selon les initiales de la dénomination anglo-saxonne de Decanted Oil), un slurry et les fractions gazoles notamment celles obtenues par distillation sous vide dénommée selon la terminologie anglo-saxonne VGO (Vacuum Gas Oil). Les charges peuvent aussi être formées par mélange de ces diverses fractions dans n'importe quelles proportions notamment de résidus atmosphériques et de résidus sous vide. Elles peuvent également contenir des coupes gazoles et gazoles lourds provenant du cracking catalytique ayant en général un intervalle de distillation d'environ 150°C à environ 370°C ou encore à 600°C ou à plus de 600 °C. Elles peuvent aussi contenir des extraits aromatiques obtenus dans le cadre de la fabrication d'huiles lubrifiantes. Selon la présente invention, les charges que l'on traite sont de préférence des résidus atmosphériques ou des résidus sous vide, ou des mélanges de ces résidus.

L'invention peut aussi, par exemple, s'appliquer aux procédés d'hydrotraitement de charges d'hydrocarbures tels que les procédés d'hydrodésulfuration, d'hydrodéazotation, d'hydrodémetallisation ou d'hydrodéaromatisation.

Dans sa forme la plus générale, l'un des objets de la présente invention est une installation comportant une série d'enceintes, dans lesquelles se produit le plus souvent une réaction chimique, permettant de réaliser une séparation des différentes fractions issues desdites réactions et plus particulièrement la séparation des effluents liquides et des effluents gazeux issus desdites réactions .
L'invention permet par exemple à la fois d'assurer un entraînement minimal de liquide dans le gaz et de produire un liquide pratiquement exempt de gaz en sortie de dispositif.
L'application de la présente installation ou de la présente méthode permet en outre de réaliser des gains substantiels tant en terme de capacité de l'unité qu'en terme de rendement des produits des réactions se produisant dans ladite unité.
La présente invention permet en outre de contrôler de manière simple et efficace le transfert dudit liquide entre plusieurs réacteurs successifs.
De plus, la présente invention permet la simplification technique et la diminution du coût de l'installation puisque aucun moyen de séparation supplémentaire n'est nécessaire entre les deux réacteurs.
La présente invention pourra en outre être appliquée facilement et à moindre frais dans le cadre de la modernisation d'unités déjà existantes.

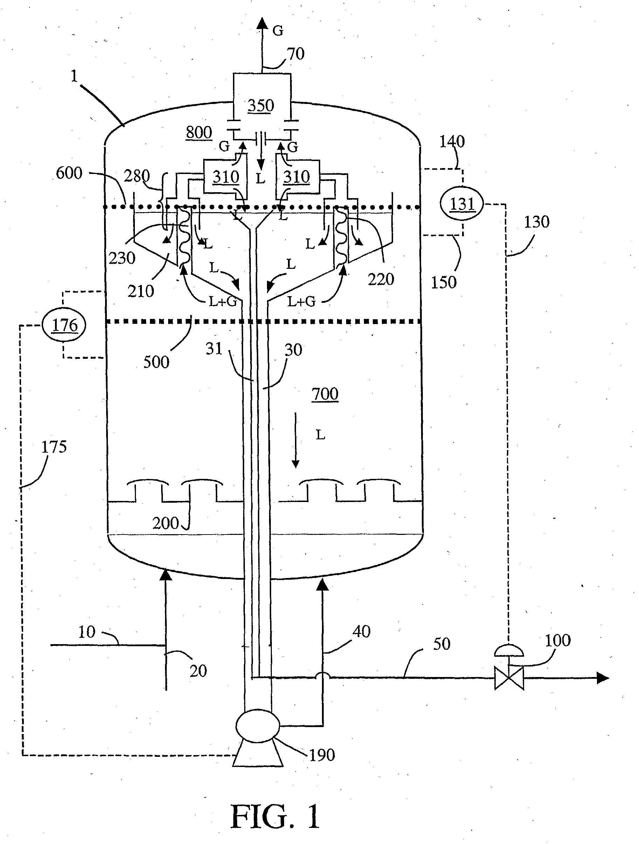

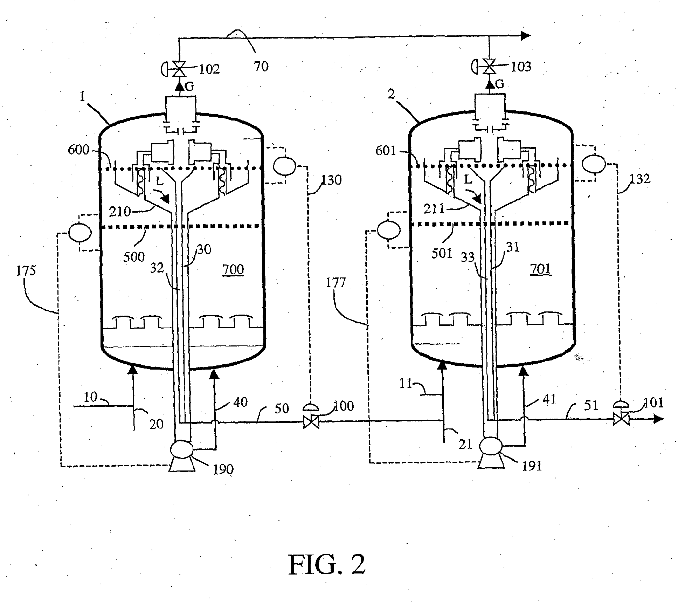

D'autres caractéristiques, détails et avantages de l'invention apparaîtront plus clairement à la lecture de la description suivante, faite à l'aide des figures 1 et 2, d'un mode de réalisation non limitatif de l'invention.
La figure 1 illustre schématiquement un exemple de réalisation d'une première enceinte équipée de dispositifs de séparation interne des fractions gazeuse et liquide en sortie d'un lit bouillonnant dans une première enceinte.
La figure 2 illustre un mode de réalisation de la présente invention dans lequel deux enceintes réactionnelles sont utilisées en série.

La figure 1 illustre, selon des principes conformes à ceux déjà décrits dans la demande de brevet FR 01/09055, un mode non limitatif de mise en oeuvre d'un réacteur 1 d'hydroconversion d'une charge lourde d'hydrocarbures en présence d'hydrogène (H₂) et de particules catalytiques au sein d'un lit bouillonnant 700, susceptible d'être utilisé pour réaliser la présente invention. En tête du réacteur 1 est installé un dispositif interne de séparation gaz/liquide.
Par exemple, un tel dispositif de séparation d'un mélange comprenant au moins une phase gazeuse et une phase liquide peut être intégré dans une enceinte et comprendre au moins:
- un équipement tel qu'une coupelle de recycle muni d'au moins un passage pour ledit mélange, ledit passage pouvant comprendre par exemple une cheminée comprenant préférentiellement des inserts générant un mouvement centrifuge au sein de la ou desdites cheminées,
- un premier élément de séparation ou séparateur primaire placé immédiatement après la ou lesdites cheminées et permettant une séparation dudit mélange en une fraction A contenant la majorité du liquide et une minorité de gaz et une fraction B essentiellement gazeuse contenant une minorité du liquide,
- une première conduite, placée à proximité de la partie supérieure de ladite enceinte, permettant l'évacuation de la fraction B essentiellement gazeuse issue du séparateur primaire,
- une deuxième conduite prolongeant la coupelle de recycle et par laquelle s'écoule gravitairement et est évacuée la fraction A contenant la majorité du liquide issu dudit séparateur primaire, ledit dispositif comprenant en outre des moyens de contrôle (130) du niveau d'expansion de ladite phase liquide dans ladite enceinte, lesdits moyens étant configurés de façon à maintenir ledit niveau à une distance de l'orifice de sortie de la fraction B supérieure ou égale à 0,05 fois le diamètre interne de ladite enceinte, de préférence supérieure à 0,1 fois ledit diamètre. Ladite distance sera selon l'invention techniquement la plus faible possible, et généralement comprise entre 0,05 et 20 fois ledit diamètre. Ladite deuxième conduite (d'évacuation de la fraction A) peut comprendre des moyens séparés de recycle et de soutirage de ladite fraction.
Bien entendu la présente invention n'est cependant pas limitée à l'utilisation d'un tel dispositif et tout dispositif de séparation gaz/liquide équivalent connu pourra être utilisé sans sortir du cadre de l'invention.
Ledit réacteur 1 est alimenté en charge liquide (comprenant par exemple un mélange d'hydrocarbures lourds) par un conduit 10 et en charge gazeuse (comprenant par exemple majoritairement de l'hydrogène) par un conduit 20, le mélange entre les deux phases pouvant s'effectuer indifféremment en amont du réacteur 1 (suivant la figure 1) ou dans le réacteur lui-même. Les termes « amont » et « aval » sont définis dans la présente description par le sens de circulation des fluides dans le présent dispositif. Des équipements 200 servant à la distribution des charges liquide et gazeuse sont disposés dans la partie inférieure du réacteur. Après passage au travers de l'équipement 200, les charges liquide et gazeuse sont mises au contact, au sein d'un lit bouillonnant 700, des particules solides catalytiques de taille et de forme connues et optimisées par l'homme du métier pour la mise en oeuvre de la réaction considérée. Les particules catalytiques sont maintenues en suspension par la vitesse ascensionnelle de la phase liquide. Le plus souvent, ladite vitesse fixe le taux d'expansion du lit de particules solides catalytiques. Le niveau 500, constitué d'un plan légèrement turbulent du fait de l'agitation provoquée par le passage des bulles de gaz et de liquide, délimite la zone riche en particules solides catalytiques. Ce niveau, pour un inventaire de particules solides donné, dépend le plus souvent essentiellement des débits de liquide et, dans une moindre mesure, des débits de gaz traversant la zone réactionnelle. Au dessus du niveau 500, lesdites particules ne sont pas entraînées significativement. La zone située entre l'interface 500 délimitant le lit desdites particules et une interface 600 est constituée très majoritairement d'un mélange d'une fraction gazeuse et d'une fraction liquide. La fraction gazeuse s'écoule en général sous forme de bulles dans la fraction liquide continue. Au dessus de l'interface 600 se situe une phase essentiellement gazeuse dans une zone 800, ne contenant que des projections de liquide dispersées dans la phase gazeuse continue.

La mise en ébullition du catalyseur est obtenue par le recyclage de la fraction liquide issue de la zone 700 dans le réacteur de façon à maintenir une vitesse superficielle de liquide adaptée aux contraintes cinétiques de la réaction. A ces fins, le liquide est soutiré du réacteur sous l'interface 600 grâce à un équipement de collecte 210 qui peut être une coupelle de recycle munie de conduits 220 comprenant des inserts permettant le passage des fluides et le désengagement de la majorité des particules solides. Ledit équipement 210 est placé le plus souvent sensiblement au centre du réacteur 1 et présente préférentiellement dans sa partie supérieure une forme sensiblement conique, par exemple telle que décrite dans le brevet US 4,221,653. Tel que représenté sur la figure 1, ledit équipement 210 est immergé au moins en partie, et le plus souvent en majorité dans la zone délimitée par les interfaces 500 et 600 et contenant une phase essentiellement liquide. Le liquide issu de l'équipement 210 alimente un conduit descendant 30 puis une pompe 190. Au refoulement de la pompe 190, le liquide est transporté par un conduit 40 et réinjecté dans le réacteur en amont des moyens de distribution 200. Selon un mode préféré de réalisation de l'invention et tel que schématisé sur la figure 1, à l'intérieur du conduit 30 est installé un conduit 31, dont la partie supérieure est immergée dans la phase essentiellement liquide, qui permet de récupérer le liquide se situant à proximité du niveau liquide 600 et de l'envoyer à l'extérieur de l'enceinte réactionnelle 700.

L'équipement de collecte 210 est relié à une série de dispositifs permettant de favoriser la séparation gaz-liquide des produits issus du lit bouillonnant 700, l'entraînement de gaz avec le liquide recyclé étant préjudiciable de façon connue au bon fonctionnement de la pompe 190. De manière à favoriser la coalescence des petites bulles et ainsi le désengagement de la fraction gazeuse de la fraction liquide, on utilise avantageusement un ou plusieurs étages de séparation (280, 310, 350) internes au réacteur 1, constitués par exemple par des équipements de type cyclone favorisant un effet vortex dans l'écoulement ou tout dispositif équivalent. Les étages de séparation (280, 310, 350) sont placés dans la partie supérieure de l'enceinte 1, c'est à dire au moins partiellement dans la zone 800 contenant la phase essentiellement gazeuse.

L'équipement de collecte 210 permettant l'alimentation de la conduite 30 et du système de recycle (190, 40) tel que précédemment décrit est également situé à l'intérieur du réacteur 1 et présente avantageusement une symétrie sensiblement axiale, généralement conique, autour de l'axe de l'enceinte entourant le réacteur 1 qui couvre dans sa plus grande dimension une section de passage représentant généralement entre 50 et 100% de la section de passage du réacteur, et de préférence entre 80 et 98% de cette section. La pompe 190 est préférentiellement située à l'extérieur du réacteur mais sans sortir du cadre de l'invention peut également être interne à ladite enceinte. La partie non recyclée dans le réacteur 1 des produits liquides de la réaction est soutirée par la conduite 50 prolongeant la conduite 31 tel que représenté sur la figure 1. Bien entendu la présente invention n'est pas limitée à ce mode de réalisation et il serait par exemple possible, sans sortir du cadre de l'invention, d'effectuer ledit soutirage des produits liquides directement dans le circuit de recyclage, soit en amont de la pompe 190 (par piquage dans la conduite 30) soit en aval de celle-ci (par piquage dans la conduite 40).

Le gaz issu des étapes de séparation et débarrassé de la majorité du liquide est évacué en tête de l'enceinte par une conduite 70 pour subir d'éventuels traitements ultérieurs. En général, le gaz circulant dans le conduit 70 contient moins de 10 % massique de liquide, de préférence moins de 7% et de manière très préférée moins de 1 %, grâce à l'utilisation combinée des moyens de séparation 280, 310 et 350.

Les produits liquides issus de la conduite 30 et sensiblement débarrassés de la majorité du gaz sont recyclés en aval du réacteur via une ligne de recyclage du liquide 40 et sous l'action d'une pompe de recycle 190. L'effluent liquide contient des quantités très faibles de gaz, généralement moins de 2% massique et le plus souvent moins de 1% massique, grâce aux étages de séparation 280, 310 et 350 mis en oeuvre au dessus de la coupelle de recycle 210.

Afin de contrôler, selon un mode possible de réalisation de l'invention, le niveau de l'interface 500 au sein du réacteur 1, des moyens de mesure et de contrôle sont mis en oeuvre pour assurer le bon fonctionnement du réacteur. On peut par exemple envisager de mesurer précisément le niveau de l'interface 500 en évaluant le profil de densité dans le réacteur à l'aide d'un gammamètre. La mesure du niveau obtenue à l'aide de ce moyen peut alimenter une boucle de régulation 175 qui, par comparaison avec la consigne rentrée par l'opérateur via un appareil de commande 176, contrôle la vitesse de rotation de la pompe de recycle 190. Grâce à un tel système, une baisse du niveau de l'interface 500 par rapport à une consigne donnée est corrigée par une augmentation de la vitesse de rotation de la pompe 190 qui induit une augmentation du débit de liquide recyclé dans le circuit de recycle et a pour conséquence l'augmentation de la vitesse superficielle de liquide dans le réacteur et par suite du taux d'expansion du lit de catalyseur.

Afin de contrôler le niveau de l'interface 600 du réacteur 1, on peut par exemple envisager d'évaluer le profil de densité dans le réacteur typiquement à l'aide d'un capteur de pression différentielle connecté au réacteur par deux prises de pression, l'une 140 située nettement au dessus de l'interface souhaitée et l'autre 150 située nettement au dessous de cette même interface. Pour éviter le bouchage de ces prises de pression, on pourra par exemple insuffler au niveau des prises de pression des quantités connues et contrôlées de gaz (par exemple la charge gazeuse initiale) ou de liquide (par exemple du liquide recyclé). La mesure de niveau obtenue de cette façon alimente une boucle de régulation 130 qui actionne, par exemple sous l'action d'un organe de commande 131, l'ouverture d'une vanne 100 située sur un conduit d'évacuation 50 des produits liquides du réacteur. Tel que précédemment décrit, ledit conduit 50 est préférentiellement placé à la suite d'un conduit 31 placé dans le conduit 30. Avec un tel système, une baisse de l'interface 600 par rapport à une consigne donnée sera corrigée par une fermeture au moins partielle de la vanne 100, une diminution du débit de liquide soutiré par la ligne 50 et par conséquence une augmentation de la fraction de liquide recyclée et donc de la position de l'interface 600 dans le réacteur 1 si les débits d'alimentation en gaz et en liquide dans les lignes 10 et 20 restent stables. Une hausse de l'interface 600 est compensée par le déversement dans le conduit 31 du liquide situé au dessus de cet interface. La vanne 100 ne sert alors que pour contrôler la différence de pression entre l'enceinte 700 et les équipements avals.

La figure 2 illustre un mode de réalisation de l'invention comprenant une installation dans laquelle deux réacteurs d'hydroconversion sont montés en série. Sur la figure 2 sont représentés deux réacteurs 1 et 2, l'effluent liquide issu du réacteur 1 étant utilisé comme charge liquide pour le réacteur 2.
La charge liquide est amenée, selon des principes tels que définis précédemment en relation avec la figure 1, par la conduite 10 et mélangée au flux d'hydrogène canalisé par la ligne 20 avant d'être injectée dans le réacteur 1. Le système de séparation gaz-liquide 210 permet de maintenir le niveau de liquide 600 à une hauteur constante et de recycler le liquide contenant moins de 1 % massique de gaz vers la pompe 190 permettant l'ébullition du lit 700. A la sortie du dispositif de séparation 210, le gaz en tête de réacteur débarrassé sensiblement de toute fraction liquide est envoyé par la ligne 70 vers le circuit de purification des gaz en même temps que l'effluent gazeux issu du réacteur 2. La pompe 190 assure le recyclage par la ligne 40 d'une partie des produits liquides issus des dispositifs de séparation gaz/liquide et collectés par l'équipement 210 vers le conduit de recycle 30. La ligne 50 prolongeant le conduit 32 et située en amont de la pompe 190, permet de véhiculer vers le réacteur 2 la fraction de liquide non recyclée issu du premier réacteur 1.
Sans sortir du cadre de l'invention, il peut être injecté à l'entrée du deuxième réacteur une charge d'appoint en hydrocarbures liquide par une ligne 11.
Selon l'invention, la charge liquide introduite dans le réacteur 2 peut être constituée en partie ou en totalité par l'effluent liquide issu du réacteur 1. Ledit réacteur 2 est par ailleurs alimenté en une charge gazeuse (comprenant majoritairement de l'hydrogène) par un conduit 21, le mélange avec la ou les phases liquides (contenant la fraction de liquide non recyclée et éventuellement une charge d'hydrocarbures liquide d'appoint) pouvant s'effectuer indifféremment en amont du réacteur 2 suivant la figure 2 ou dans le réacteur lui-même. Le transport du liquide depuis le conduit 32 jusque vers le réacteur 2 peut-être avantageusement assuré par différence de pression, la pression du réacteur 1 étant à une valeur légèrement supérieure à celle du réacteur 2. La différence de pression entre les deux réacteurs 1 et 2 pourra par exemple être régulée par l'ouverture ou la fermeture de vannes 102 et 103 placés sur la conduite 70. Le débit de la phase liquide issue du réacteur 1 peut avantageusement être régulé par la vanne 100 placée sur le conduit 50 sans en perturber l'écoulement. Dans le réacteur 2, la charge véhiculée par le conduit 50 est mélangée à un flux gazeux 21. Après réaction dans un lit bouillonnant 701, des éléments de recycle 211 et un ou plusieurs étages de séparations de même nature que ceux équipant le réacteur 1 assurent la séparation et l'évacuation des fractions gazeuse et liquide issues des produits de la réaction. La phase liquide est transportée via le conduit 31 vers la pompe d'ébullition 191 et la phase gazeuse est évacuée en tête de réacteur pour rejoindre l'effluent gazeux issu du réacteur 1. Au refoulement de la pompe 191, la ligne 41 assure le recyclage du liquide dans le réacteur 2. Une partie du liquide issu du réacteur 2, via le conduit 33 et la ligne 51 est soit collectée, soit acheminée vers un éventuel traitement ultérieur, par exemple vers un troisième réacteur identique dans sa structure et son fonctionnement aux précédents. La vanne 101 permet par ailleurs de maintenir un niveau de liquide 601 constant dans le réacteur 2 par recyclage d'une fraction ajustée de la fraction liquide sortant dudit réacteur 2. Des dispositifs de contrôle des niveaux 132 et 177, semblables dans leur structure et leur fonctionnement aux dispositifs 130 et 175 déjà décrits en relation avec la figure 1, permettent de contrôler les niveaux des interfaces 601 et 501 du réacteur 2.
La figure 2 illustre les avantages procurés par l'utilisation des dispositifs de séparation selon l'invention dans le cas de l'utilisation de plusieurs réacteurs en série. Dans la mise en oeuvre des procédés de conversion utilisant des lits bouillonnants, il est avantageux de placer deux réacteurs en série afin d'optimiser la transformation de la charge liquide. L'utilisation d'un ou plusieurs étages de séparation internes (280, 310, 350), éventuellement combinée au contrôle du niveau des interfaces 600, 601 respectivement par les moyens 130, 132 dans les réacteurs 1 et 2 permet d'évacuer tous les produits gazeux, à savoir l'hydrogène non consommé et les hydrocarbures les plus légers issus de la réaction d'hydroconversion, par le conduit 70 et de n'envoyer vers le second réacteur 2 que la charge liquide issue du premier réacteur via les lignes 50 sans séparation intermédiaire entre les deux réacteurs.
Ainsi, selon l'invention illustrée par le mode de réalisation de la figure 2, pour un volume de deuxième réacteur constant, la séparation selon l'invention des effluents gazeux et liquides à l'intérieur de la première enceinte permet d'introduire dans le premier réacteur un flux plus important de charge liquide à traiter et d'augmenter ainsi fortement la capacité de l'unité. Par ailleurs, une telle augmentation de capacité peut selon l'invention être réalisée sans que la vitesse superficielle des gaz au sein des lits réactionnels entraîne de manière significative les particules de catalyseurs dans le circuit de recycle.

La comparaison des exemples qui suivent illustre les avantages liés à la présente invention. L'exemple 1 (comparatif) donnent les résultats obtenus sur une unité classiquement utilisée en hydroconversion de résidus.
L'exemple 2 permet de comparer les conversions obtenues dans le cas d'une unité fonctionnant selon la présente invention.
L'exemple 3 permet de comparer les capacités obtenues dans le cas d'une unité fonctionnant selon la présente invention.

Ces exemples sont issus d'expérimentations réalisées dans des unités pilotes fonctionnant en lit bouillonnant. D'autres expérimentations ont été réalisées en réacteur de type slurry avec un pompe adaptée et des résultats de même nature ont été obtenus.

### Exemple 1 (comparatif)

On traite un résidu sous vide (RSV) lourd d'origine Safaniya. La densité à 15°C est de 1,048. Tous les rendements sont calculés à partir d'une base 100 (en masse) de charge RSV.

On traite le résidu sous vide dans une unité pilote comportant deux enceintes réactionnelles montées en série fonctionnant selon les principes des lits bouillonnants. La totalité de la charge initiale RSV est introduite dans le premier réacteur, et l'ensemble des effluents issus du premier réacteur est directement réinjecté dans le second réacteur, sans séparation intermédiaire. Chaque réacteur a un volume total de 2 litres.

Cette unité pilote simule une unité industrielle d'hydrotraitement de résidu sous vide en lit bouillonnant selon le procédé H-Oil commercialisé par la société Axens. L'écoulement des fluides est ascendant dans ce réacteur comme dans le cas d'une unité industrielle.

Les conditions opératoires de mise en oeuvre sont les suivantes :
- débit de charge (premier réacteur): 1,4 l/h à P=0,1 MPa, T= 15°C (soit 2 l/h dans les conditions expérimentales),
- pression totale: 156 bars absolus (premier et deuxième réacteur)
- flux d'hydrogène: 560 l/h à P= 0,1 MPa et T = 15°C (soit environ 8,7 l/h dans les conditions réactionnelles) en entrée du deuxième réacteur, 280 l/h à P= 0,1 MPa et T = 15°C (soit environ 4,3 l/h dans les conditions réactionnelles).
- température au sein des deux réacteurs: 410 °C.
Le catalyseur employé dans les deux réacteurs est un catalyseur NiMo.
Les produits issus du second réacteur sont fractionnés au laboratoire en une fraction essence dont l'intervalle de distillation est compris entre le point initial (PI) et 150°C, une fraction gazole d'intervalle de distillation compris entre 150 et 375°C, une fraction distillat sous vide (intervalle 375-540°C) et une fraction résiduelle (de point de distillation supérieur à 540°C).
Les différents débits (en pourcentage massique) des produits obtenus en sortie du deuxième réacteur après fractionnement sont :

| Produit | Rendements |
|---|---|
| Hydrogène sulfureux | 4,3 |
| Gaz | 2,0 |
| Essence (PI - 150°C) | 2,5 |
| Diesel (150 - 375°C) | 14,8 |
| Gazole sous vide (375 - 540°C) | 24,6 |
| Résidu (> 540 °C ) | 51,8 |

### Exemple 2 : (selon l'invention)

La charge est la même que celle utilisée dans l'exemple précédent. Les conditions opératoires restent identiques à celles de l'exemple 1. On utilise à l'intérieur de la première enceinte, selon l'invention, un dispositif de séparation permettant une séparation des effluents gazeux et liquide de telle sorte la fraction liquide comprenne moins de 1% poids de la fraction gazeuse, la taille des réacteurs et le volume des lits catalytiques restent identiques.
Grâce au dispositif, le volume des effluents gazeux introduit dans le deuxième réacteur est considérablement réduit par rapport à celui de l'exemple 1 où tous les gaz d'hydrocarbures produits dans la première étape étaient réinjectés dans le deuxième réacteur. Le seul débit gazeux à l'entrée du second réacteur est constitué du débit de gaz très faible venant du premier réacteur moins de 1% poids) et du débit d'hydrogène additionnel dans le second réacteur (280 l/h à P= 0,1 MPa et T = 15°C ) soit environ 4,3 l/h dans les conditions réactionnelles. Le débit de charge liquide entrant dans le second réacteur est composé exclusivement de la fraction liquide soutirée du premier réacteur.
Les différents débits des produits obtenus en sortie du deuxième réacteur sont, après un fractionnement identique à celui de l'exemple 1:

| Produit | Rendements |
|---|---|
| Hydrogène sulfureux | 4,1 |
| Gaz | 2,0 |
| Essence (C5 - 150°C) | 2,3 |
| Diesel (150 - 375°C) | 18,1 |
| Gazole sous vide (375 -540 °C) | 32,7 |
| Résidu (540°C +) | 40,8 |

La comparaison des exemples 1 et 2 permet de montrer que la présente invention permet de diminuer la teneur finale en résidu de 11 %.
La présente invention permet donc d'augmenter de manière significative la conversion du résidu en conservant en outre une fraction sensiblement constante des hydrocarbures les plus légers issus du procédé d'hydroconversion.

### Exemple 3 (selon l'invention)

Cet exemple permet de montrer l'amélioration possible, par application de la présente invention, de la capacité des unités pour un volume réactionnel constant, par exemple dans le cadre d'une restructuration (revamping selon le terme anglais) d'une unité déjà existante.
Pour traiter une même charge que celle de l'exemple 1, on utilise deux réacteurs de mêmes dimensions que ceux de l'exemple 1. Les produits gazeux sont séparés du liquide à l'intérieur du premier réacteur selon des caractéristiques identiques à celles de l'exemple 2. Le liquide issu de la séparation est injecté dans le deuxième réacteur avec un complément d'hydrogène purifié correspondant à la quantité nécessaire pour obtenir un niveau de conversion globale de l'unité identique à celui de l'exemple 1.
Ainsi, à volume de réacteur constant, le volume d'hydrocarbures gazeux séparé lors de la première étape de la réaction dans la première enceinte permet une injection plus importante de charge initiale (RSV) pour un taux de conversion du résidu constant en sortie du deuxième réacteur. Dans le cas présent, pour un taux de résidu final identique de 51,8% en sortie de la deuxième enceinte, la capacité de l'unité de l'exemple 1 modifié selon l'invention, est augmentée de manière significative : un débit de charge de 3,7 l/h dans les conditions expérimentales (soit un débit total de charge de 2,6 kg/h) est obtenue, soit une augmentation de 1,2 kg/h par rapport aux conditions de l'exemple 1.
L'application de la présente installation permet donc d'augmenter la capacité de l'unité d'environ 85 %.

## Revendications

1. Installation pour le traitement d'hydrocarbures comprenant au moins deux enceintes de traitement et des moyens de séparation des fractions liquide et gazeuse contenues dans le mélange polyphasique produit dans la première enceinte de traitement, dans une zone de mise en contact (700) d'une charge liquide d'hydrocarbures, d'une charge gazeuse et de particules solides, ladite installation étant **caractérisée en ce qu'**elle comprend :
- une première enceinte (1) de traitement comprenant des moyens d'introduction (10) d'une charge d'hydrocarbures et des moyens d'introduction (20) d'une charge gazeuse dans ladite zone (700), des moyens internes à ladite enceinte de séparation (280, 310, 350) des fractions gazeuse et liquide issues de ladite zone (700), des moyens de collecte (210, 32) et des moyens d'évacuation (50) de ladite fraction liquide vers l'extérieur de ladite première enceinte (1), des moyens d'évacuation (70) de ladite fraction gazeuse vers l'extérieur de ladite première enceinte (1) et des moyens de contrôle (130) du niveau d'expansion de ladite fraction liquide dans ladite enceinte (1),
- des moyens de transfert (50) d'au moins une partie de ladite fraction liquide vers une deuxième enceinte réactionnelle (2),
- une deuxième enceinte (2) de traitement comprenant une deuxième zone de mise en contact (701), et des moyens d'introduction d'une charge gazeuse et des moyens d'introduction dans ladite deuxième zone (701) d'une charge liquide comprenant au moins une partie de la fraction liquide issue de la première enceinte (1) de traitement.

2. Installation selon la revendication 1 comprenant en outre des moyens de recycle (30, 190, 40) dans la première enceinte (1) d'une partie de ladite fraction liquide.

3. Installation selon la revendication 1 ou 2 dans lequel ladite deuxième enceinte comprend en outre des moyens internes de séparation des fractions gazeuse et liquide issues de la deuxième zone de mise en contact (701), des moyens de collecte (211, 33) et des moyens d'évacuation (51) de ladite fraction liquide vers l'extérieur de ladite deuxième enceinte (2), des moyens d'évacuation (70) de ladite fraction gazeuse vers l'extérieur de ladite deuxième enceinte (2) et des moyens de contrôle (132) du niveau d'expansion de la fraction liquide dans ladite deuxième enceinte (2).

4. Installation selon la revendication 3 comprenant en outre des moyens de recycle (31, 191, 41) dans la deuxième enceinte (2) d'une partie de ladite fraction liquide.

5. Installation selon l'une des revendications 1 à 4 comprenant en outre des moyens de contrôle (175, 177) des niveaux d'expansion des zones de mise en contact (700, 701) dans lesdites enceintes (1, 2).

6. Installation selon les revendications précédentes dans lequel lesdits moyens d'introduction de la deuxième enceinte comprennent en outre des moyens d'appoint (11) en charge liquide.

7. Installation selon les revendications précédentes comprenant en outre des moyens de contrôle (100) du débit liquide transféré entre les deux enceintes (1, 2).

8. Installation selon les revendications précédentes comprenant en outre des moyens de contrôle (102, 103) du débit gazeux issu desdites enceintes (1, 2).

9. Installation selon l'une des revendications précédentes dans laquelle au moins la première enceinte comprend :
- un équipement de recycle (210) muni d'au moins un passage pour ledit mélange polyphasique,
- au moins un élément de séparation interne à ladite enceinte (280) placé immédiatement après le ou lesdits passages et permettant une séparation dudit mélange en une fraction A contenant la majorité du liquide et une minorité de gaz et une fraction B essentiellement gazeuse contenant une minorité du liquide,
- une conduite (70), placée à proximité de la partie supérieure de ladite enceinte, permettant l'évacuation de la fraction B,
- une conduite d'évacuation (30) prolongeant l'équipement de recycle (210) et par laquelle s'écoule gravitairement et est évacuée la fraction A ,
- des moyens de contrôle (130) du niveau d'expansion de ladite phase liquide dans ladite enceinte, lesdits moyens étant configurés de façon à maintenir ledit niveau à une distance de l'orifice de sortie de la fraction B supérieure ou égale à 0,05 fois le diamètre interne de ladite enceinte.

10. Procédé de traitement étagé d'hydrocarbures comprenant une séparation des fractions liquide et gazeuse contenues dans le mélange polyphasique produit par chaque étage dudit traitement, ledit procédé étant **caractérisé en ce qu'**il comporte au moins les étapes suivantes :
a) on introduit une charge d'hydrocarbures et une charge gazeuse dans une première enceinte de traitement, et on met en contact ladite charge d'hydrocarbures et ladite charge gazeuse avec des particules solides,
b) on sépare à l'intérieur de ladite première enceinte réactionnelle les fractions liquide et gazeuse contenues dans le mélange polyphasique issu de l'étape a),
c) on récupère séparément la fraction gazeuse et la fraction liquide à l'extérieur de la première enceinte,
d) on introduit au moins une partie de la fraction liquide issue de la première enceinte
dans une deuxième enceinte avec une charge gazeuse et on met en contact au sein de la deuxième enceinte ladite fraction liquide et ladite charge gazeuse avec des particules solides.

11. Procédé selon la revendication 10 dans lequel :
e) on sépare à l'intérieur de ladite deuxième enceinte les fractions liquide et gazeuse contenues dans le mélange polyphasique issu de l'étape d),
f) on récupère la fraction gazeuse et la fraction liquide à l'extérieur de ladite deuxième enceinte.

12. Procédé selon la revendication 10 ou 11 dans lequel on utilise n enceintes, n étant compris entre 2 et 10, au moins une partie de la fraction liquide issue d'une enceinte n-1 placée en amont étant introduite dans l'enceinte n placée en aval dans le sens de circulation des fluides.

13. Procédé selon l'une des revendications 10 à 12 pour l'hydrotraitement ou l'hydroconversion d'une charge ou d'un mélange de charges comprises dans le groupe constitué par les résidus atmosphériques ou des résidus sous vide de distillation directe, les résidus désasphaltés, les résidus issus de procédé de conversion, les procédés d'hydrotraitement des lourds en lit bouillonnant, les huiles désasphaltés par un solvant, les asphaltes, un mélange de fractions hydrocarbonées choisie dans le groupe formé par une huile de coupe légère, une huile de coupe lourde, une huile décantée, un slurry et les fractions gazoles notamment celles obtenues par distillation sous vide.

14. Procédé selon l'une des revendications 10 à 13 opérant en lit bouillonnant au moins dans la première enceinte réactionnelle.

15. Procédé selon l'une des revendications 10 à 13 opérant avec un lit de particules solides en suspension (slurry) au moins dans la première enceinte réactionnelle.
